# EUROPEAN PATENT SPECIFICATION

(11) **EP 1 185 403 B1**
(45) Date of publication and mention of the grant of the patent: **05.01.2005**
(21) Application number: 00921224.2
(22) Date of filing: 21.03.2000
(51) Int. Cl.: B28D 1/00

(54) **GUIDE DEVICE FOR CUTTING WITH POWER TOOLS**
FÜHRUNGSVORRICHTUNG ZUM DURCHFÜHREN VON SCHNITTEN MITTELS MOTORWERKZEUGEN
DISPOSITIF DE GUIDAGE POUR EFFECTUER DES DECOUPES AU MOYEN D'OUTILLAGE ELECTRIQUE

(30) Priority: 22.04.1999 SE 9901435
(43) Date of publication of application: 13.03.2002
(73) Proprietor: Aktiebolaget Electrolux, 105 45 Stockholm (SE)
(72) Inventor: DONNERDAL, Ove, S-433 70 Sävedalen (SE)
(86) International application number: PCT/SE2000/000545
(87) International publication number: WO 2000/064652

(56) References cited:
- GB-A- 2 158 404
- US-A- 3 323 507
- US-A- 3 763 845
- US-A- 4 134 459
- US-A- 4 986 252

## Description

### Technical field

The subject invention refers to a guide device for cutting with power-driven cutter tools in walls, ceilings etc. The device includes a rail which is intended to be attached to the surface to be cut, and a carriage adapted to be running in said rail and which includes attachment parts for attachment of the power tool. (see for example US-A-3 763 845).

### Background of the invention

Power cutters and other power-driven cutter tools can be used for cutting in surfaces such as walls, floors or ceiling, e.g. for cutting openings for doors or windows. Particularly when using construction materials such as brick, concrete etc. this method is applicable, and as a rule the cutting is made with water supply so that slurry is created. Hereby handheld cutter tools can be used. This requires however great professional skill, and the risk of deviations from the desired cutting line is great. It is especially difficult to cut a horizontal line since the gravitation rather counteracts than helps the user. Such kind of cutting work is also heavy to carry out, especially when the cutting line is located high up.

Therefore, in order to make such kind of cutting work easier it is furthermore known to use a rail guide device arranged on the surface to be cut and along which the power driven cutter tool is run. In this way it is easier to make the cut and also most often with a better result. Normally, in these cases special saws are used, so called wall saws, exclusively adapted for this kind of cutting work. But it is also known to arrange guide devices to which handheld machines can be attached.

These earlier known devices comprises a moulded rail where there are rail tracks or similar on one or several sides, and a carriage which runs on the rail and on which the tool is arranged. The guide device must however be able to sustain relatively great forces and force moments. The tool is in itself often relatively heavy, and the user also presses it against the surface during cutting work. The fit between the rail and the carriage must therefore be satisfactory and free from play and with a large contact surface. A disadvantage with these earlier known guide devices is however that they are therefore sensitive to dirtying, at the same time as they are used in a very dirty environment where the risk of dirtying is imminent. When cutting concrete for example, concrete slurry will splash around the tool and get stuck to the rail. These deposits of concrete slurry will in time harden and turn into a concrete layer which will be hard to remove and will be lying as a hard layer on top of the outside lying guide device, whereas the displacement of the carriage will be complicated and even totally prevented. The risk of dirtying is particularly high at cutting horizontally whereas the device from considerations of space and similar must be arranged below the cutting line with the result that slurry will fall right down on the rail.

Furthermore, the earlier known guide device designs, due to the requirements of stability and stiffness, are very big and heavy and expensive to produce. Very small tolerances are as well required which makes those devices even more complicated and expensive to produce.

### Purpose of the invention

The purpose of the subject invention is to completely, or at least in part, solve the above outlined problems with the earlier known technique, and hereby to achieve advantages within a number of fields.

### Summary of the invention

The above mentioned purpose is achieved by a guide device in accordance with the appended claim 1.

Specifically, the invention refers to a guide device of the kind mentioned initially, including a rail and a carriage. The rail according to the invention has a half open, or slotted, profile with an interior cavity surrounded by sidewalls and with an aperture, which on both sides is surrounded by flanges, on which at least the interior surfaces are curved. Furthermore the carriage comprises a carrying part to which at least three pairs of rollers are arranged, of which at least one pair are bearing rollers adapted to be inside the cavity of the rail and to lie in contact with the curved flanges, and at least one pair are tension rollers adapted to press said bearing rollers against each curved flange respectively. It is particularly advantageous if the flanges have such a curve that their mid parts will protrude from the cavity of the rail.

By this design the bearing rollers will be lying in contact with the respective inside of the flanges, which is well protected against dirtying. In this manner the device becomes less sensitive. Furthermore, by this curve the carriage will be given a stability sideways, which reduces the demand for extra side rollers or similar for stabilizing the carriage in this direction. And by this design the device can also be made simple and light without therefore reducing the stability, whereas it becomes easier to handle, as well as simpler and cheaper to produce.

According to a preferred embodiment of the invention the tension rollers are arranged so that they are running on the opposite side of the curved flanges compared with the bearing rollers. In this way essentially only the thickness of the flanges will become critical as regards tolerance. Since the thickness in most practical applications is limited it will reduce the demand for exactness of dimensioning and consequently also reduce the complexity during manufacturing as well as reduce the production costs.

According to a further embodiment the carriage comprises two pairs of bearing rollers arranged on a distance from each other, and a pair of tension rollers arranged between these pairs of bearing rollers in their running direction. Hereby a satisfactory stability is achieved to prevent the carriage from tipping forwards or backwards. Furthermore it is preferable to arrange most of the rollers in the protected inside of the rail as this will decrease sensitivity against dirtying.

It is furthermore preferable that the tension rollers are arranged movably on the carriage, whereby the direction of the displacement at least partly is directed against and/or away from the bearing rollers, and that the carriage comprises locking devices for locking of the tension rollers in the desired position. It is particularly preferable that the tension rollers are arranged on at least one arm, which in turn is pivotally arranged on the carriage, and that said arm extends to pass the attachment position of the tension rollers and thereby acts as a lever for displacement of the tension rollers, and that an adjusting screw is arranged in order to act against the lever for adjusting the position of the tension rollers. Hereby the carriage can easily be secured to the rail so that it runs free from play, and this adjustment of the carriage can also be made quick and easy at demand.

Furthermore it is advantageous that the attachment part of the guide device according to the invention is movably mounted to the carrying part of the carriage, preferably by means of a link arm system. This will increase the flexibility of the cutter tool substantially, both in the longitudinal direction of the rail and out from the rail. Preferably also the link arm system is rotationally mounted to the carriage. Hereby cutting in many different directions can be made from the same position of the rail, which means increased flexibility, and the number of set-ups of the rail can be decreased and the work will be more effective. These and other characteristics of the invention will become more apparent from the detailed description of different embodiments and with the support of the drawing figures.

### Brief description of the drawings

The invention will be described in the following by way of various embodiments thereof with reference to the accompanying drawing figures, in which:
Figure 1 shows a general view in perspective of a guide device according to an embodiment of the invention, with a cutter tool attached hereto;
Figure 2 shows a view from the side of the carriage of the guide device according to figure 1; and
Figure 3 shows a sectional view of the carriage according to figure 2 along the section III-III, and arranged onto a rail;
Figure 4 shows an alternative embodiment of the carriage in the same view as shown in figure 3;
Figure 5 shows another alternative embodiment of the carriage in the same view as shown in figure 3; and
Figure 6 shows a fourth alternative embodiment of the carriage, shown in the same view as in figure 2.

### Description of embodiments

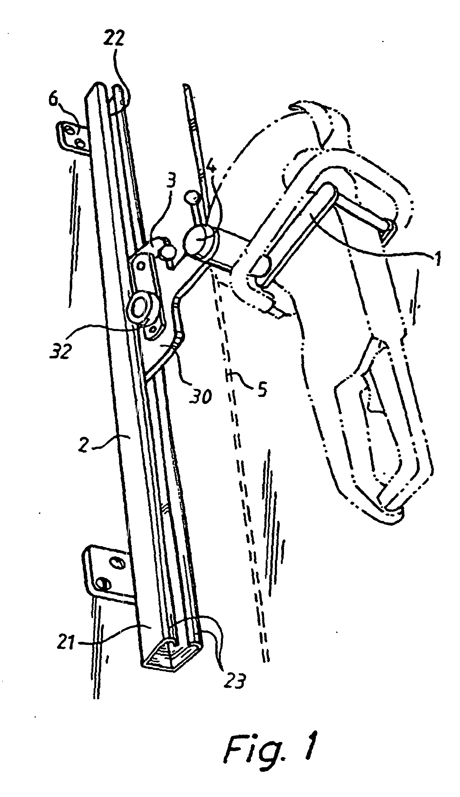

Figure 1 shows a general view of a guide device according to an embodiment of the invention, with a cutter tool 1, such as a ring saw or the like, attached hereto. The guide device includes a rail 2 and a carriage 3. The carriage is movable along the rail and includes an attachment part 4 for attachment of the power-driven cutter tool. The rail is adapted to be attached to the surface to be cut, such as walls, floors, ceilings etc., and preferably in parallel with the desired cutting line 5. The attachment part comprises preferably a swivel point around which the cutter tool can be rotated against or away from the surface, but which not allows rotation in any other direction. Such attachment parts are known since earlier within this technical field and will therefore not be described in closer detail. The rail can have attachments 6 with which it can be attached to the wall by means of screws, bolts or the like. However, other ways to attach the rail onto the surface are conceivable. The attachments 6 are furthermore preferably arranged fixed to the rail, only allowing a cutting angle which normally is 90° against the wall surface. It is however also possible to use adjustable attachments for an optional adjustment of the cutting angle. Alternatively the attachment part for attachment of the cutter tool onto the carriage could be adjustable in order to achieve a variety of cutting angles. Furthermore, one or several of the attachments could be movable in order to avoid deformation tensions of the rail.

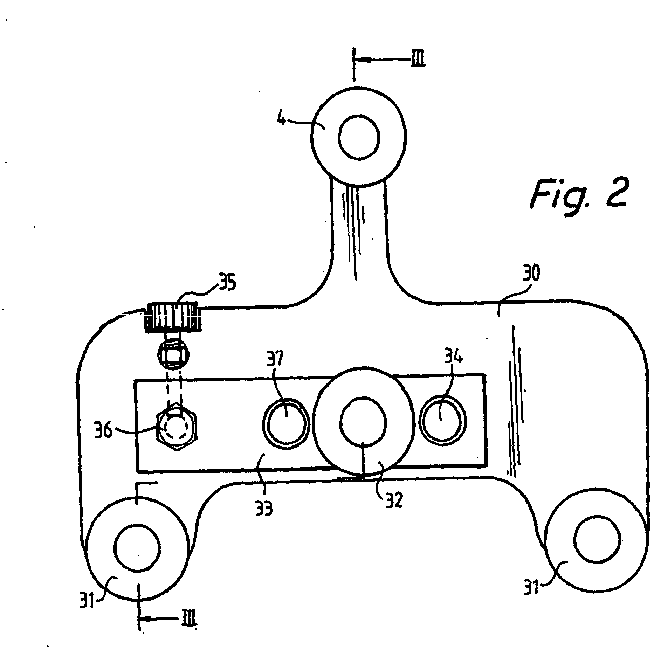

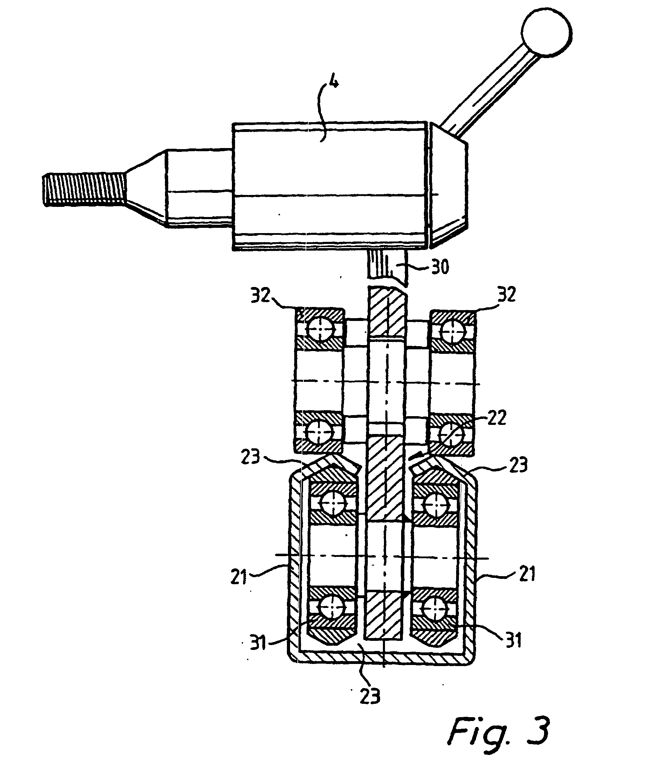

In figure 2 and 3 the carriage and the rail are shown more in detail. The rail includes a half open profile with an interior cavity 20 surrounded by sidewalls 21 and with an aperture 22. The aperture extends accordingly as a longitudinal slot along the entire or at least most part of the rail 2. The aperture is surrounded on both sides by flanges 23 where at least the interior surfaces, i.e. those surfaces facing against the cavity, are curved. However, preferably also the exterior surfaces are curved, and the flanges could preferably have a relatively constant thickness. The curve is furthermore preferably such that the mid parts of the flanges will protrude from the cavity of the rail, but also other kind of curves can be used within the scope of the invention. Preferably the curved flanges have an essentially pointed profile, but also other profiles, such as a rounded U-form, or a hexagonal form or similar can as well be used. Furthermore, the illustrated rail is made of a flanged disc material, or it could be made of a disc material formed in another suitable way. Obviously it is also possible to use other rail constructions, e.g. the opposite part of the rail of the aperture could have a reinforcement in form of a parallel stiffening wall or similar. The rail could also be moulded thus comprising a variable wall thickness.

The carriage according to the invention includes a carrying part 30 and at least three pairs of rollers are arranged thereonto. Of these are at least one pair bearing rollers 31 adapted to be inside the cavity 20 of the rail and to contact the curved interior surfaces of the flanges 23, and at least one pair are tension rollers 32 adapted to press said bearing rollers 31 against each curved flange 23 respectively.

Preferably the rollers include rolling bearings, whereby the rolling bearings of the roller couples are located on a mutual, non-rotating axle. The mounting of both the axles of the carrying part as well as the rolling bearings on the axles could preferably be made by pressfitting. It is however also possible to carry out the mounting by welding, or by bolting or the like. It is also possible to cast the axles and the carrying part into one and the same piece. Other types of rollers are however also possible to use within the scope of the invention.

Preferably the tension rollers 32 are arranged so that they are running on the opposite side of the curved flanges 23 compared with the bearing rollers. In this way the distance that separates the rollers perpendicularly towards the longitudinal direction of the rail is essentially only the thickness of the flanges, which will result in increased tolerances for the guide device and will make the manufacturing simpler and the product cheaper. Due to the curve on the inside of the flanges the inner bearing rollers are given a guidance sideways whereby the carriage becomes stable. Furthermore, the inside of the flanges is that surface of the rail that is being less exposed to dirtying. The outer side of the flanges is however more exposed to dirtying. But preferably also the upper side of the flanges is curved whereby the tension rollers will have only one contact point against the rail. Hereby the device becomes essentially self-cleansing since dirty particles etc. will be pushed away by the rollers when running along the rail. Also other ways to achieve a point contact are conceivable, such as to use rollers with a curved or pointed periphery.

Alternatively it is however also possible to arrange the tension rollers 32 in the inside of the rail 2. Hereby the tension rollers will act against the side of the rail opposite the aperture 22 and in this way also in this case press the bearing rollers 31 against the flanges surrounding the aperture. By this arrangement also the tension rollers 32 and their roller tracks will be protected against dirtying by the surrounding rail. At the same time the distance between the roller tracks will increase thus reducing the tolerances allowed.

Preferably the carriage comprises two pairs of bearing rollers 31 and one pair of tension rollers 32. It is however possible to instead use two pairs of tension rollers and one pair of bearing rollers, but it is preferable to let most of the rollers be running on the inside of the rail. Obviously it is possible to use even further pairs of rollers. The bearing rollers 31 are preferably arranged on a distance from each other and with one pair of tension rollers 32 arranged between those pairs of bearing rollers in their running direction, as shown in the preferred embodiment. By this arrangement of the rollers the carriage becomes stable and sturdy.

Furthermore the tension rollers should be arranged movably to the carriage whereby the direction of the displacement at least partly is directed against and/or away from the bearing rollers. The tension rollers should be lockable in the desired position by means of locking devices acting against the carriage. In the preferred embodiment this is achieved in that the tension rollers 32 are arranged on at least one arm 33, which in turn is pivotally arranged on the carriage. However, preferably two arms 33 are used, one on each side of the carrying part 30, connected by a mutual pivot axle 34 in order to achieve a stable and sturdy design. The arms extend to pass the attachment position of the tension rollers 32 and act thereby as a lever for displacement of the tension rollers. An adjustment screw 35 or similar can then be arranged in order to act against the lever for adjustment of the position of the tension rollers. Hereby the user can easily adjust the pressure of the tension rollers against the rail by screwing the adjustment screw 35. The adjustment screw should be arranged so that it is accessible from the outside when the carriage is arranged on the rail. In the preferred embodiment the adjustment screw is arranged in the part of the carrying part of the carriage opposite the rail and in a direction essentially perpendicularly towards the rail. Furthermore the adjustment screw is arranged essentially right between the two levers 32 and acts against the same via a connecting axle 36 of the arms.

In the preferred embodiment the arms 33 can be locked in the desired position by means of a bolt joint 37, which connects the arms and by fastening tightens the arms against the carrying part 30. Between the arms there can also be arranged sleeves or similar in order to secure a stiff and sturdy connection of the arms. Obviously there can however be several bolt joints 37. It is also possible to instead use other types of fastening devices.

In case of using several pairs of tension rollers these could either be arranged onto separate fastening devices allowing a separate fastening of each tension roller couple, or the tension roller couples could be arranged on a mutual fastening device in a bogie construction on a rock or similar.

According to the preferred embodiment the bearing rollers are axially curved on their perimeter adapted to correspond to the curve of the flange surfaces thereby providing a large contact surface against the same. For example, in case the flanges have a pointed form the rollers could have a correspondingly pointed form but with a cut-off top. Hereby contact can be achieved at the both accessible flanks whereby the contact surface becomes large. Furthermore, in case the rail would be made of a somewhat deformable material the fastening by means of the tension rollers would contribute to deform the rail so that a large contact surface against the bearing rollers is achieved. The axially curved profile of the rollers if preferably achieved in that rings with a desirable profile are pressed onto rolling bearings of standard type, preferably sealed ball bearings.

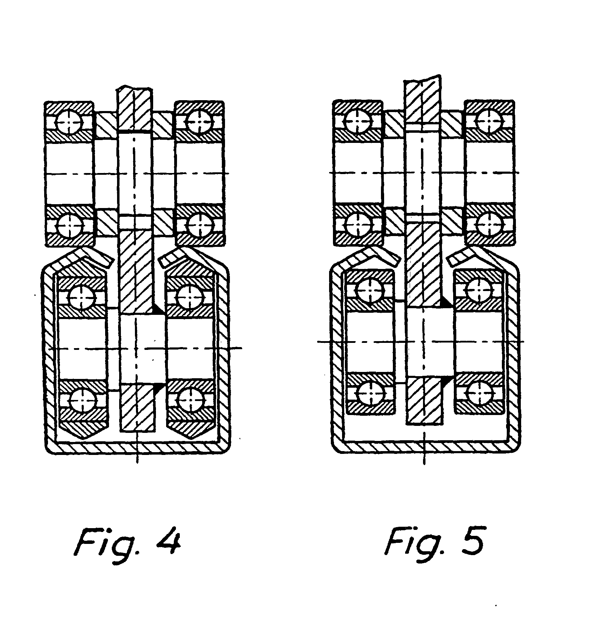

According to an alternative embodiment, as shown in figure 4, the bearing rollers and/or the flanges could however have such a form so that contact onto only one flank is achieved. Hereby the contact surface becomes smaller, but still a perfectly satisfactory stability sideways can be achieved. A further alternative embodiment is shown in figure 5 where the bearing rollers are not axially curved on their perimeter corresponding to the flanges. Hereby point contact between the bearing rollers and the flanges is achieved. Owing to the curved surfaces of the flanges a satisfactory stability sideways is achieved. In this case also the sensitivity against dirtying will be reduced since an automatic cleansing of the roller track is hereby achieved during use and this is desirable in extremely dusty applications.

Because of the stability sideways achieved by the curved surfaces of the flanges there will in most cases be no need for additional rollers or similar for the carriage according to the invention, in order to take up and stabilize force moments and forces sideways. Hereby it is possible to use only a limited number of roller couples, and to let all the roller couples have rolling axles that are essentially parallel with each other. Furthermore, since at least some of the roller couples according to the invention are working on the protected surface, which is the least exposed to dirtying, the device's sensitivity to dirt will decrease. Furthermore the invention will provide a device that is simple and cheap to produce at the same time as it is easy to apply and adjust, as well as stable and sturdy, resulting in a satisfactory precision at use.

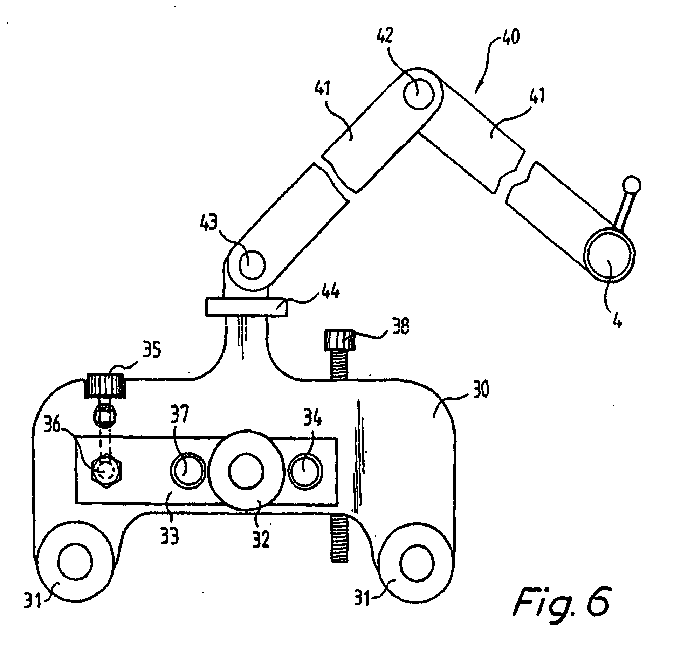

In figure 6 is shown a fourth embodiment of the carriage according to the invention. The carriage according to this embodiment corresponds to a great deal with the carriage according to the first described embodiment, and the same numeral references have been used to define similar parts in the drawings. What distinguishes this embodiment from the earlier is that the attachment part 4 has been arranged movably to the carrying part 30 of the carriage. In this embodiment this is achieved by a link arm system 40 comprising two connected arms 41 by means of a pivot link 42, where the attachment part 4 is arranged in one end and the other end is arranged on the carrying part 30 of the carriage. This will allow a very great flexibility for the cutter tool, on the one hand a greater range for cutting beyond the length of the rail and on the other hand possibility for cutting considerably further away from the fastening plane of the rail, e.g. for cutting sections protruding from a wall, and in a comer the connecting wall could be cut considerably further away from the comer. The link arm system could as well consist of one link arm only, e.g. in that the exterior arm is mounted directly to the carrying part via a pivot link 43. The mounting to the carrying part is thus pivotable via the pivot link 43, and besides that preferably rotatable via a rotation link 44. The rotation link is furthermore preferably lockable in various desirable positions. Springs or similar could preferably be arranged and thereby acting between the arms in order to direct the arms into a basic position. The carriage according to this embodiment is also preferably provided with a locking device for locking the carriage in a desired position to the rail. This locking device could for instance consist of a locking screw 38, which is mounted in threaded holes on the carrying part of the carriage and thereby acting against the bottom of the rail.

Through this embodiment of the carriage cutting in many different directions can be made without having to move the rail, e.g. the rail can be set up horizontally, whereas a horizontal cut can be made parallel with the rail, as earlier described. According to this embodiment the carriage can be directed into a desired position and be locked there, whereby the link arms can be rotated in the rotation link 44 into a desired position and be locked there. By using this link arm system a vertical cut can then be made and further vertical cuts can be made in the same way. For example, in this way openings for windows could be cut out from only two rail positions that will make the work more simple and effective. The invention has now been described by means of various embodiments. It is however obvious that many variants of the invention are possible, e.g. the tension rollers can be arranged both inwards as well as outwards, different types of profiles of rollers and rails can be used, and the arrangement can be used for different types of cutter tools etc. Such and other kindred variants must be considered as covered by the invention such as it is defined by the appended patent claims.

## Claims

1. A guide device for cutting with power-driven cutter tools (1) in walls, floors, ceilings etc, including a rail (2) intended to be attached to the surface to be cut, and a carriage (3) which is adapted to be running along said rail and which includes attachment parts (4) for attachment of the power-driven cutter tool, **characterized in that** the rail (2) includes a half open profile with an interior cavity surrounded by side walls (21), and with an aperture (22), which on both sides is surrounded by flanges (23), on which at least the interior surfaces are curved, and the carriage (3) includes a carrying part (30) on which at least three pairs of rollers (31, 32) are arranged, of which at least one pair are bearing rollers (31) adapted to be inside the cavity of the rail and to contact the curved flanges (23), and at least one pair are tension rollers (32) adapted to press said bearing rollers (31) against each curved flange (23) respectively.

2. A guide device according to claim 1, wherein the tension rollers (32) are arranged so that they are running on the opposite side of the curved flanges (23) compared with the bearing rollers (31).

3. A guide device according to claim 1 or 2, wherein the carriage includes two pairs of bearing rollers (31) arranged on a distance from each other, and a pair of tension rollers (32) arranged between these pairs of bearing rollers in their running direction.

4. A guide device according to any one of the preceding claims, wherein the tension rollers (32) are movably arranged on the carriage (3), which displacement direction at least partly is directed against and/or away from the bearing rollers (31), and that the carriage includes locking devices (37) for locking of the tension rollers into the desired position.

5. A guide device according to claim 4, wherein the tension rollers (32) are arranged onto at least one arm (33), which in turn is movably arranged onto the carriage, which arm extends to pass the attachment position of the tension rollers (32) and thereby acts as a lever for displacement of the tension rollers.

6. A guide device according to claim 5, wherein an adjustment screw (35) is arranged to act against the lever (33) for adjustment of the position of the tension rollers.

7. A guide device in accordance with any one of the preceding claims, wherein the bearing rollers (31) are axially curved adapted to provide a large contact surface against the curved flanges (23).

8. A guide device in accordance to any one of the preceding claims, wherein the flanges (23) have such a curve that their mid parts will protrude from the cavity of the rail.

9. A guide device according to any one of the preceding claims, wherein the curved flanges (23) have an essentially pointed profile.

10. A guide device according to any one of the preceding claims, wherein all above mentioned roller couples (31, 32) have roller axles which are essentially parallel with each other.

11. A guide device in accordance with any one of the preceding claims, wherein the attachment part (4), preferably by means of a link arm system (40) containing at least one link arm, is movably arranged onto the carrying part (30) of the carriage.

12. A guide device according to claim 11, wherein the link arm system (40) is rotatably (44) mounted to the carrying part (30).

## Patentansprüche

1. Führungsvorrichtung zur Durchführung von Schnitten mit motorgetriebenen Schneidwerkzeugen (1) in Wänden, Fußböden, Raumdecken usw., welche enthält: eine Schiene (2), die dem Zweck dient, an der zu schneidenden Fläche angebracht zu werden, und einen Schlitten (3), welcher so ausgelegt ist, dass er längs der genannten Schiene läuft, und welcher Befestigungsteile (4) zum Anbringen des motorgetriebenen Schneidwerkzeugs aufweist, **dadurch gekennzeichnet, dass** die Schiene (2) ein halboffenes Profil mit einem von Seitenwänden (21) umgebenen Hohlraum und mit einer Öffnung (22) aufweist, welche auf beiden Seiten von Bördelrändern (23) umgeben ist, auf denen zumindest die Innenflächen gekrümmt sind, und dass der Schlitten (3) ein tragendes Teil (30) aufweist, auf welchem mindestens drei Paar Rollen (31, 32) angeordnet sind, von denen mindestens ein Paar Tragrollen (31) sind, die so ausgelegt sind, dass sie sich im Innern des Hohlraums der Schiene und im Kontakt mit den gekrümmten Bördelrändern (23) befinden, und von denen mindestens ein Rollenpaar Spannrollen (32) sind, die so ausgelegt sind, dass sie die genannten Tragrollen (31) gegen den jeweiligen gekrümmten Bördelrand (23) drücken.

2. Führungsvorrichtung nach Anspruch 1, bei welcher die Spannrollen (32) so angeordnet sind, dass sie auf derjenigen Seite der gekrümmten Bördelränder (23) laufen, die derjenigen der Tragrollen (31) gegenüber liegt.

3. Führungsvorrichtung nach Anspruch 1 oder 2, bei welcher der Schlitten zwei Paar Tragrollen (31), die in einer gewissen Entfernung voneinander angeordnet sind, und ein Paar von Spannrollen (32), die zwischen diesen Paaren von Tragrollen in ihrer Laufrichtung angeordnet sind, aufweist.

4. Führungsvorrichtung nach irgend einem der vorangehenden Ansprüche, bei welcher auf dem Schlitten (3) die Spannrollen (32) beweglich angeordnet sind, deren Verschiebungsrichtung zumindest teilweise gegen die und/oder von den Tragrollen (31) weg gerichtet ist, und bei welcher der Schlitten Verriegelungsvorrichtungen (37) zum Verriegeln der Spannrollen in der gewünschten Stellung aufweist.

5. Führungsvorrichtung nach Anspruch 4, bei welcher die Spannrollen (32) auf mindestens einem Arm (33) angeordnet sind, welcher seinerseits auf dem Schlitten beweglich angeordnet ist, wobei dieser Arm sich so weit erstreckt, dass er an der Anbringungsstelle der Spannrollen (32) vorbei führt und dadurch als Hebel für die Verschiebung der Spannrollen wirkt.

6. Führungsvorrichtung nach Anspruch 5, bei welcher eine Stellschraube (35) so angebracht ist, dass sie gegen den Hebel (33) zum Einstellen der Stellung der Spannrollen wirkt.

7. Führungsvorrichtung nach irgend einem der vorangehenden Ansprüche, bei welcher die Tragrollen (31) in Achsenrichtung derart angepasst gekrümmt sind, dass sie eine große Kontaktfläche gegen die gekrümmten Bördelränder (23) liefern.

8. Führungsvorrichtung nach irgend einem der vorangehenden Ansprüche, bei welcher die Bördelränder (23) eine solche Krümmung aufweisen, dass ihre mittleren Teile aus dem Hohlraum der Schiene hervortreten.

9. Führungsvorrichtung nach irgend einem der vorangehenden Ansprüche, bei welcher die gekrümmten Bördelränder (23) ein im Wesentlichen spitz zulaufendes Profil aufweisen.

10. Führungsvorrichtung nach irgend einem der vorangehenden Ansprüche, bei welcher all die oben erwähnten Rollenpaare(31, 32) Rollenachsen aufweisen, die im Wesentlichen parallel zueinander sind.

11. Führungsvorrichtung nach irgend einem der vorangehenden Ansprüche, bei welcher das Anbringungsteil (4) vorzugsweise mittels eines Gelenkarmsystems (40), welches mindestens einen Gelenkarm aufweist, am tragenden Teil (30) des Schlittens beweglich angeordnet ist.

12. Führungsvorrichtung nach Anspruch 11, bei welcher das Gelenkarmsystem (40) am tragenden Teil (30) drehbar (44) angebaut ist.

## Revendications

1. Dispositif de guidage pour découper au moyen d'outils de coupe entraînés électriquement (1) dans des murs, des planchers, des plafonds, etc., comprenant un rail (2) conçu pour être fixé à la surface à découper, et un chariot (3) qui est adapté pour être actionné le long dudit rail et qui comprend des parties de fixation (4) pour une fixation à l'outil de coupe entraîné électriquement, **caractérisé en ce que** le rail (2) comprend un profil à demi ouvert avec une cavité intérieure entourée de parois latérales (21), et avec une ouverture (22), qui est entourée des deux côtés de brides (23), sur lequel au moins les surfaces intérieures sont courbées, et le chariot (3) comprend une partie de support (30) sur laquelle au moins trois paires de roulements (31, 32) sont disposées, desquelles au moins une paire sont des galets de roulement (31) adaptés pour être à l'intérieur de la cavité du rail et pour entrer en contact avec les brides courbées (23), et au moins une paire sont des galets tendeurs (32) adaptés pour presser lesdits galets de roulement (31) contre chaque bride courbée (23) respectivement.

2. Dispositif de guidage selon la revendication 1, dans lequel les galets tendeurs (32) sont disposés de sorte qu'ils soient actionnés sur le côté opposé des brides courbées (23) par rapport aux galets de roulement (31).

3. Dispositif de guidage selon la revendication 1 ou 2, dans lequel le chariot comprend deux paires de galets de roulement (31) disposées à une distance l'une de l'autre, et une paire de galets tendeurs (32) disposée entre ces paires de galets de roulement dans leur direction d'actionnement.

4. Dispositif de guidage selon l'une quelconque des revendications précédentes, dans lequel les galets tendeurs (32) sont disposés de manière amovible sur le chariot (3), dont la direction de déplacement est au moins en partie dirigée vers et/ou à partir des galets de roulement (31), et en ce que le chariot comprend des dispositifs de blocage (37) pour bloquer les galets tendeurs dans la position souhaitée.

5. Dispositif de guidage selon la revendication 4, dans lequel les galets tendeurs (32) sont disposés sur au moins un bras (33), qui à son tour est disposé de manière amovible sur le chariot, lequel bras s'étend pour passer la position de fixation des galets tendeurs (32) et agit ainsi comme un levier pour déplacer les galets tendeurs.

6. Dispositif de guidage selon la revendication 5, dans lequel une vis de réglage (35) est disposée pour agir contre le levier (33) pour régler la position des galets tendeurs.

7. Dispositif de guidage selon l'une quelconque des revendications précédentes, dans lequel les galets de roulement (31) sont adaptés courbés axialement pour présenter une surface de contact importante contre les brides courbées (23).

8. Dispositif de guidage selon l'une quelconque des revendications précédentes, dans lequel les brides (23) présentent courbe telle que leurs parties centrales dépasseront de la cavité du rail.

9. Dispositif de guidage selon l'une quelconque des revendications précédentes, dans lequel les brides courbées (23) ont un profil essentiellement pointu.

10. Dispositif de guidage selon l'une quelconque des revendications précédentes, dans lequel tous les couples de roulements (31, 32) mentionnés ci-dessus ont des axes de roulement qui sont essentiellement parallèles l'un par rapport à l'autre.

11. Dispositif de guidage selon l'une quelconque des revendications précédentes, dans lequel la partie de fixation (4), de préférence au moyen d'un système de bras de raccordement (40) contenant au moins un bras de raccordement, est disposée de manière amovible sur la partie de support (30) du chariot.

12. Dispositif de guidage selon la revendication 11, dans lequel le système de bras de raccordement (40) est monté de manière rotative (44) sur la partie de support (30).
